(19) Europäisches Patentamt
European Patent Office
Office européen des brevets

(11) **EP 4 692 026 A1**

(12) **EUROPEAN PATENT APPLICATION**
published in accordance with Art. 153(4) EPC

(43) Date of publication:
**11.02.2026 Bulletin 2026/07**

(21) Application number: **24780084.0**

(22) Date of filing: **22.03.2024**

(51) International Patent Classification (IPC):
**C04B 35/622** (2006.01)  **B08B 3/04** (2006.01)
**B08B 3/12** (2006.01)  **B08B 5/02** (2006.01)

(52) Cooperative Patent Classification (CPC):
**B08B 3/04; B08B 3/12; B08B 5/02; C04B 35/622**

(86) International application number:
**PCT/JP2024/011514**

(87) International publication number:
**WO 2024/203966 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.03.2023 JP 2023047427**

(71) Applicant: **Niterra Materials Co., Ltd.
Yokohama-shi, Kanagawa 235-0032 (JP)**

(72) Inventors:
• **IMANAKA, Keita
Yokohama-shi, Kanagawa 235-0032 (JP)**
• **KIMURA, Masamitsu
Yokohama-shi, Kanagawa 235-0032 (JP)**
• **ITO, Zen
Yokohama-shi, Kanagawa 235-0032 (JP)**

(74) Representative: **Hoffmann Eitle
Patent- und Rechtsanwälte PartmbB
Arabellastraße 30
81925 München (DE)**

(54) **METHOD FOR RECOVERING DUSTING POWDER AND METHOD FOR PRODUCING SINTERED CERAMIC OBJECT**

(57) A method for recovering bedding powder according to an embodiment includes: a cleaning step of vibrating a cleaning liquid to clean a ceramic compact piece to which bedding powder is attached; and a recovery step of recovering at least bedding powder from a mixed liquid generated in the cleaning step. The cleaning step is preferably a step of vibrating the cleaning liquid at an ultrasonic frequency of 10 kHz or more in an ultrasonic cleaning. The cleaning step preferably includes water cleaning after the ultrasonic cleaning.

FIG. 4

**Description**

**TECHNICAL FIELD**

Embodiments described later generally relate to a method for recovering bedding powder and a method for producing a ceramic sintered compact.

**BACKGROUND ART**

A ceramic sintered compact is excellent in strength, abrasion resistance, heat dissipation property and the like. The ceramic sintered compact is used as, for example, a plate-shaped ceramic sintered compact. The plate-shaped ceramic sintered compact is used as, for example, a ceramic sintered compact for boards (hereinafter, referred to simply as a "ceramic board") which is used for circuits and the like. In a process of producing a ceramic board, a long sheet-shaped ceramic compact is prepared by, for example, a doctor blade method, and a plate-shaped ceramic compact after cutting of the sheet-shaped ceramic compact into a required size is sintered to obtain a ceramic board.

In recent years, for the purpose of sintering many plate-shaped ceramic compacts at once in order to improve mass productivity of ceramic boards, a plurality of plate-shaped ceramic compacts coated with bedding powder (a release agent) have been stacked and sintered. The bedding powder serves to prevent sintering-induced sticking between stacked plate-shaped ceramic compacts. For example, in Japanese Patent No. 5673847 (Patent Document 1), the size and the application amount of bedding powder composed of boron nitride (BN) is controlled. Thus, even when a plurality of plate-shaped ceramic compacts are stacked with bedding powder therebetween, and sintered, undulation of ceramic boards obtained is reduced, and sticking between ceramic boards obtained (corresponding to plate-shaped ceramic compacts before sintering) is suppressed.

For sintering a plate-shaped ceramic compact to obtain a plate-shaped ceramic sintered compact (ceramic board), a sheet-shaped ceramic compact is cut into an intended size. Cutting of the sheet-shaped ceramic compact generates offcuts of the ceramic compact (hereinafter, referred to simply as "offcut"). The offcut is mainly composed of a ceramic compact which has been a part forming a sheet-shaped ceramic compact. Defective pieces generated in processes of producing and transporting sheet-shaped ceramic compacts and plate-shaped ceramic compacts, and the like, are removed and treated as offcuts.

Reuse of offcuts as a raw material has been considered. For example, Japanese Patent No. 3779481 (Patent Document 2) discloses a ceramic compact that is easy to recover and reuse, which is from a raw material in which a binder is improved. Japanese Patent Laid-Open No. 2015-091742 (Patent Document 3) provides a method in which offcuts immersed in a solvent and then mixed are reused as a recycled slurry.

**PRIOR ART DOCUMENTS**

**PATENT DOCUMENT**

Patent Document 1: Japanese Patent No. 5673847
Patent Document 2: Japanese Patent No. 3779481
Patent Document 3: Japanese Patent Laid-Open No. 2015-091742

**SUMMARY OF THE INVENTION**

**PROBLEMS TO BE SOLVED BY THE INVENTION**

It is desirable to reuse the offcuts described above from the viewpoint of improving productivity and reducing wastes. However, for reusing offcuts generated after application of bedding powder as a raw material for new ceramic boards or other new ceramic sintered compacts, it is required to consider how bedding powder attached to offcuts is separated and recovered from the offcuts or ceramic powder generated from the offcuts. If offcuts from which bedding powder is not separated, or ceramic powder generated from the offcuts is used as a raw material for new ceramic boards or other new ceramic sintered compacts, characteristics such as insulation property and strength may be deteriorated. For example, in the inventions disclosed in Patent Document 2 and Patent Document 3, which are suitable for reuse of offcuts to which bedding powder is not attached, offcuts to which bedding powder is attached cannot be reused because the offcuts and the bedding powder cannot be separated.

Embodiments are intended to address these problems, and to provide a method for separating bedding powder from offcuts to which the bedding powder is attached, or from ceramic powder generated from the offcuts, and recovering the bedding powder.

**MEANS FOR SOLVING THE PROBLEMS**

A method for recovering bedding powder according to an embodiment includes: a cleaning step of vibrating a cleaning liquid to clean a ceramic compact piece to which bedding powder is attached; and a recovery step of recovering at least bedding powder from a mixed liquid generated in the cleaning step.

**BRIEF DESCRIPTION OF THE DRAWINGS**

FIG. 1 is a diagram illustrating an example of an application step of attaching bedding powder to a sheet-shaped ceramic compact.
FIG. 2 is a diagram illustrating an example of a sheet-shaped ceramic compact.
FIG. 3 is a diagram illustrating an example of a cutting step of cutting a sheet-shaped ceramic compact.
FIG. 4 is a diagram illustrating an example of a cleaning step of cleaning offcuts in a method for recovering bedding powder according to an embodiment.
FIG. 5 is a flowchart illustrating an example of a method for producing a ceramic sintered compact according to an embodiment.
FIG. 6 is a flowchart illustrating an example of a cleaning step according to an embodiment.

**DESCRIPTION OF EMBODIMENTS**

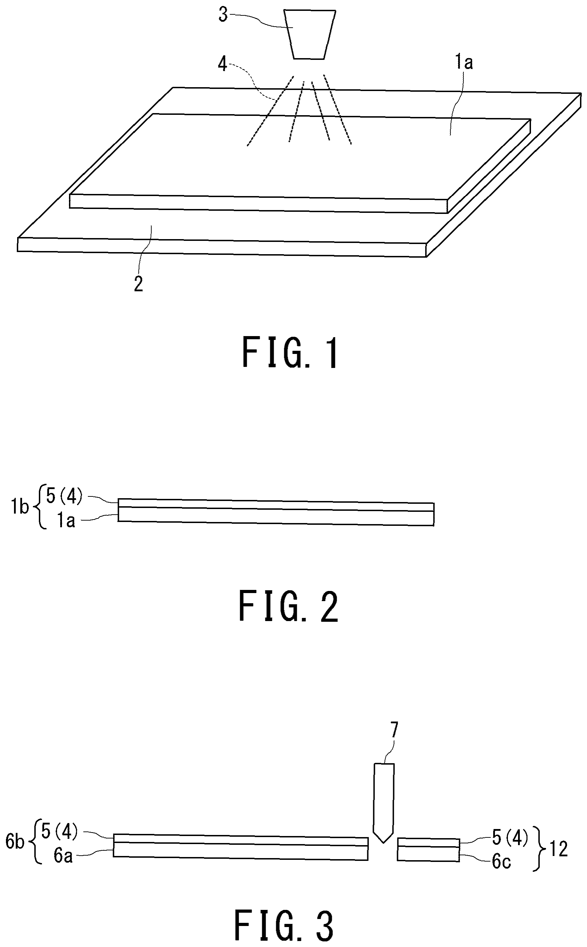

A method for recovering bedding powder and a method for producing a ceramic sintered compact according to embodiments will be described with reference to FIGS. 1 to 6.

A method for recovering bedding powder according to an embodiment includes: a cleaning step of vibrating a cleaning liquid 9 to clean an offcut 12 formed by a ceramic compact piece 12 to which bedding powder is attached; and a recovery step of recovering at least bedding powder from a mixed liquid generated in the cleaning step.

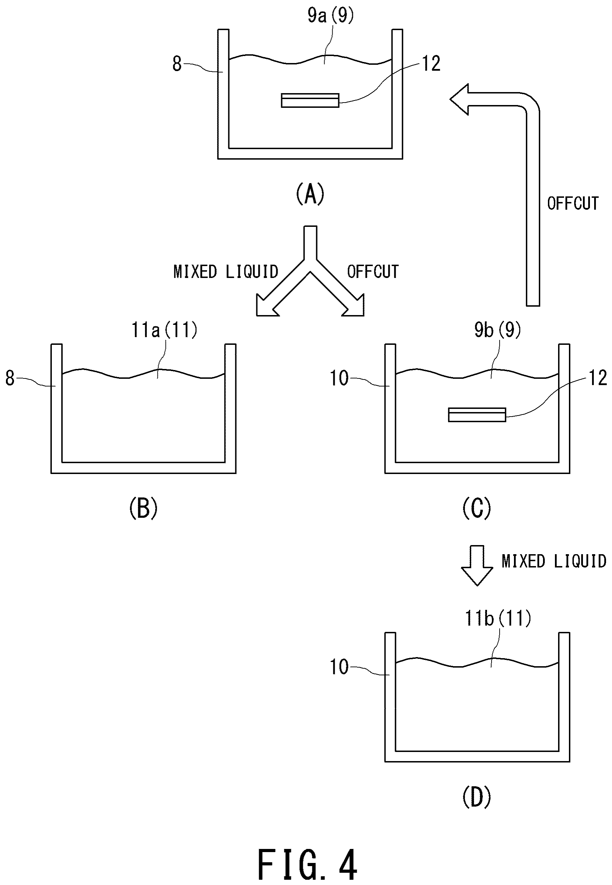

An example of an application step of attaching bedding powder (a release agent) 4 to a sheet-shaped ceramic compact 1a is shown in FIG. 1. An example of a sheet-shaped ceramic compact 1b (the sheet-shaped ceramic compact 1a to which bedding powder 4 is attached) is shown in FIG. 2. An example of a cutting step of cutting the sheet-shaped ceramic compact 1b is shown in FIG. 3. An example of a cleaning step of cleaning offcuts in a method for recovering bedding powder according to an embodiment is shown in FIG. 4. In FIGS. 1 to 4, symbol 1 denotes a sheet-shaped ceramic compact (symbol 1a: a sheet-shaped ceramic compact free of applied bedding powder, symbol 1b: a sheet-shaped ceramic compact including the sheet-shaped ceramic compact 1a and bedding powder applied thereto), symbol 2 denotes a placement member for the sheet-shaped ceramic compact 1, symbol 3 denotes a bedding powder applicator, symbol 4 denotes bedding powder, symbol 5 denotes a bedding powder layer, symbol 6 denotes a plate-shaped ceramic compact (symbol 6a: a plate-shaped ceramic compact free of applied bedding powder, symbol 6b: a plate-shaped ceramic compact including the plate-shaped ceramic compact 6a and bedding powder applied thereto, that is, one of two parts obtained by cutting the sheet-shaped ceramic compact 1b, symbol 6c: an offcut free of applied bedding powder), symbol 7 denotes a cutting jig, symbol 8 denotes an ultrasonic cleaning apparatus, symbol 9 denotes a cleaning liquid (symbol 9a: a cleaning liquid for a first cleaning step, symbol 9b: a cleaning liquid for a second cleaning step), symbol 10 denotes a water cleaning tank, symbol 11 denotes a mixed liquid (symbol 11a: a mixed liquid for first cleaning, symbol 11b: a mixed liquid for second cleaning), and symbol 12 denotes an offcut.

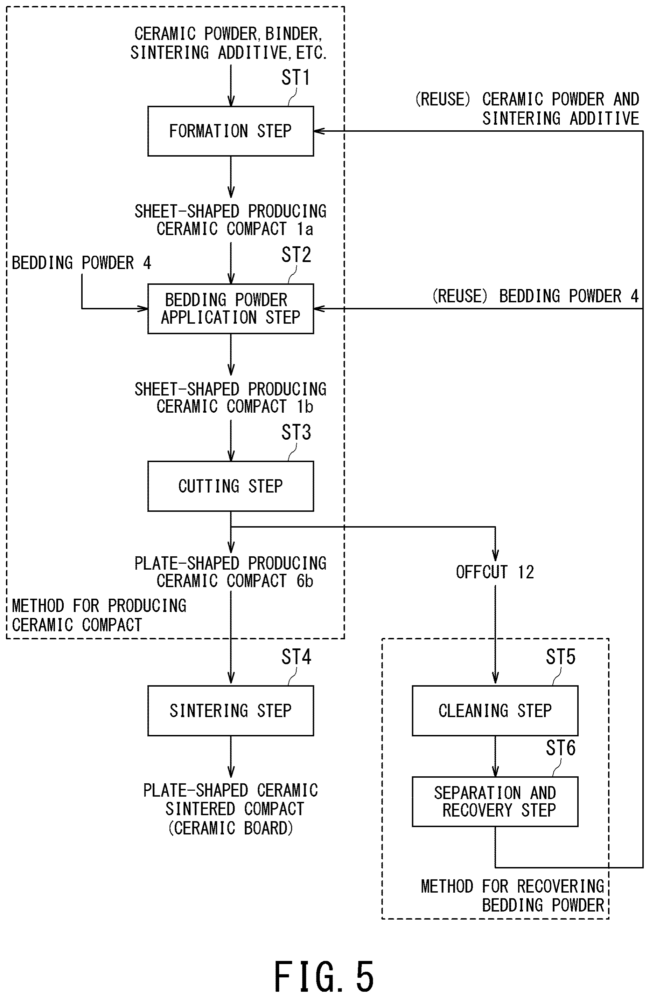

A method for producing a ceramic sintered compact according to an embodiment is shown in FIG. 5. In FIG. 5, symbol ST1 denotes a formation step, symbol ST2 denotes a bedding powder application step, symbol ST3 denotes a cutting step, symbol ST4 denotes a sintering step, symbol ST5 denotes a cleaning step, and symbol ST6 denotes a separation and recovery step.

The sheet-shaped ceramic compact 1a refers to ceramic powder formed into a sheet shape. In the sheet-shaped ceramic compact 1a, an organic binder, a sintering additive and the like may be added to ceramic powder as necessary. The shape of front and back surfaces of the sheet-shaped ceramic compact 1a is not limited to a quadrangular shape, and may be a circular shape, an irregular shape or the like.

Examples of the ceramic powder for forming the sheet-shaped ceramic compact 1a include powder containing, as a main component, one selected from silicon nitride, aluminum nitride, aluminum oxide, zirconium oxide and silicon carbide. Here, the main component of the sheet-shaped ceramic compact 1a or a plate-shaped ceramic sintered compact formed by cutting and sintering the sheet-shaped ceramic compact 1a is a component that is the largest in amount on a mass ratio basis, among components forming the sheet-shaped ceramic compact 1a or the plate-shaped ceramic sintered compact. The sheet-shaped ceramic compact 1a containing silicon nitride as a main component becomes a silicon nitride sintered compact after sintering. The sheet-shaped ceramic compact 1a containing aluminum oxide as a main component becomes an aluminum oxide sintered compact after sintering.

In the sheet-shaped ceramic compact 1a made from raw material powder obtained by mixing two or more selected from silicon nitride, aluminum nitride, aluminum oxide, zirconium oxide and silicon carbide, or a plate-shaped ceramic sintered compact formed by cutting and sintering the sheet-shaped ceramic compact 1a, a component that is larger in amount on a mass ratio basis may be regarded as a main component. For example, an Al-Zr sintered compact is a sintered product of a ceramic compact made from raw material powder obtained by mixing aluminum oxide and zirconium oxide. The plate-shaped Al-Zr sintered compact may be regarded as a plate-shaped aluminum oxide sintered compact if it contains aluminum oxide as a component that is the largest in amount.

In the formation step ST1 (shown in FIG. 5), the sheet-shaped ceramic compact 1a is formed by a doctor blade method, mold molding, cold isostatic press (CIP), an injection molding method or the like. A doctor blade method is preferred when a ceramic board is prepared as described later. The doctor blade method is capable of preparing a long sheet-shaped ceramic compact 1a. Thus, the mass productivity of ceramic boards (plate-shaped ceramic sintered compacts) can be improved. Hereinafter, the present invention will be described by taking as an example a case in which the sheet-shaped ceramic compact 1a is obtained by a doctor blade method.

In the formation step ST1 (shown in FIG. 5), degreasing treatment is performed on the sheet-shaped ceramic compact 1a as necessary. The sheet-shaped ceramic compact 1a also includes a decreased product obtained by performing degreasing treatment. Alternatively, the degreasing treatment may be performed on the sheet-shaped ceramic compact 1b in the bedding powder application step ST2 after application of bedding powder 4, or may be performed on the plate-shaped ceramic compact 6b in the cutting step ST3 after cutting is performed. The sheet-shaped ceramic compact 1b also includes a degreased product obtained by performing degreasing treatment on the sheet-shaped ceramic compact 1b, and the plate-shaped ceramic compact 6b also includes a degreased product obtained by performing degreasing treatment on the plate-shaped ceramic compact 6b.

Subsequently, in the bedding powder application step ST2 (shown in FIG. 5), bedding powder 4 is applied to the sheet-shaped ceramic compact 1a to form a bedding powder layer 5. Examples of the bedding powder 4 include one or more selected from boron nitride, zirconium oxide, aluminum oxide and aluminum nitride. The bedding powder 4 is applied to a surface of the sheet-shaped ceramic compact 1a to form the bedding powder layer 5. When plate-shaped ceramic compacts 6b obtained by cutting the sheet-shaped ceramic compact 1b are stacked and sintered, the bedding powder layer 5 serves to prevent sticking between the stacked plate-shaped ceramic compacts 6b. The bedding powder 4 is preferably boron nitride. As described later, the plate-shaped ceramic compact 6b is fired at about 1,600 to 2,000°C. The boron nitride hardly sticks to the plate-shaped ceramic compact 6b even in a high-temperature environment, and therefore is suitably used as bedding powder 4. There are various boron nitrides such as hexagonal, cubic and rhombohedral boron nitrides. Of these, hexagonal boron nitride (h-BN) is preferred.

The average particle size of bedding powder 4 is preferably 20 $\mu$m or less. By reducing the average particle size of bedding powder 4, the bedding powder layer 5 having a uniform film thickness is easily formed on a surface of the sheet-shaped ceramic compact 1a. If the average particle size of bedding powder 4 is more than 20 $\mu$m, there is a possibility that the bedding powder layer 5 becomes uneven, and the surface properties of the ceramic sintered compact are adversely affected. Preferably, the average particle size of bedding powder 4 is more preferably 10 $\mu$m or less, and further more preferably 6 $\mu$m or less. The lower limit of the average particle size of bedding powder 4 is not particularly limited, but is preferably 2 $\mu$m or more. If the average particle size is less than 2 $\mu$m, handleability may deteriorate.

As shown in FIG. 1, the sheet-shaped ceramic compact 1a is formed in a sheet shape on the placement member 2. Examples of the placement member 2 include a film and a plate-shaped member. The sheet-shaped ceramic compact 1a may be formed in a sheet shape directly on the placement member 2, or may be placed on the placement member 2 during the formation process. For example, by forming the sheet-shaped ceramic compact 1a on the film-shaped placement member 2 by a doctor blade method, the long sheet-shaped ceramic compact 1a can be prepared.

Examples of the method for applying bedding powder 4 to the sheet-shaped ceramic compact 1a include various methods such as a method using a spray, a method of passage through a solution containing bedding powder 4, a method using a brush, a method using static electricity, a method using gravure printing, and a method of immersion in a solution containing bedding powder 4. When a solution containing bedding powder 4 is used, water or an organic solvent may be used as a solvent. Examples of the organic solvent include alcohol, cellulose, carboxymethylcellulose, acryl-based polymers, polyvinyl alcohol, polyvinyl pyrrolidone, and amine-functionalized polymers. Examples of the acryl-based polymer include acrylic acid, acrylamide, and maleic anhydride. Examples of the amine-functionalized polymer include allylamine, ethyleneimine, and oxazoline. Examples of the alcohol include one selected from ethanol, methanol, butanol, and propanol.

FIG. 1 illustrates an application method for applying bedding powder 4 to the sheet-shaped ceramic compact 1a by use of a bedding powder applicator 3 of spray type. Preferably, the bedding powder applicator 3 is of spray type. In the case of the spray type, the amount of bedding powder 4 sprayed can be stabilized. In addition, the bedding powder 4 can be applied over a large area by providing a plurality of spray nozzles. In the case of the spray type, the long sheet-shaped ceramic compact 1a can be placed on the film-shaped placement member 2, and coated with bedding powder 4 while being moved. In the case of the spray type, a solution containing bedding powder 4 may be sprayed.

The bedding powder layer 5 composed of bedding powder 4 (shown in FIG. 2) is formed on the sheet-shaped ceramic compact 1a to form the sheet-shaped ceramic compact 1b.

Subsequently, in the cutting step ST3 (shown in FIG. 5), the sheet-shaped ceramic compact 1b is cut into an intended size. The cutting is performed by use of, for example, a cutting jig 7. The long or wide sheet-shaped ceramic compact 1b is preferably prepared for improving the mass productivity of ceramic boards. The ceramic compact shrinks during sintering. To address this, the sheet-shaped ceramic compact 1b is cut into a size that is larger than the size of an intended ceramic board. By cutting the sheet-shaped ceramic compact 1b, the plate-shaped ceramic compact 6b in which the bedding powder layer 5 is uniform and an offcut 12 that is a defective piece are obtained (shown in FIG. 3).

Subsequently, in the sintering step ST4 (shown in FIG. 5), the plate-shaped ceramic compact 6b is sintered to produce a plate-shaped ceramic sintered compact, that is, a ceramic board. In the sintering step ST4, the plate-shaped ceramic compact 6b is sintered by performing heat treatment typically at 1,600 to 2,000°C under ordinary pressure or increased pressure. In the sintering step ST4, heat treatment may be performed in two stages differing in temperature range for heat treatment.

In cutting of the sheet-shaped ceramic compact 1b into an intended size in the cutting step ST3 (shown in FIG. 5), the offcut 12 is formed in addition to the plate-shaped ceramic compact 6b. The bedding powder 4 is attached on the offcut 12. In the cleaning step ST5 and the separation and recovery step ST6 (shown in FIG. 5), the offcut 12 is cleaned to separate and recover the bedding powder 4. Examination of the application amount of bedding powder 4 may be performed on the sheet-shaped ceramic compact 1b, and a portion where the application amount of bedding powder 4 departs from an appropriate value (the application amount of bedding powder 4 is excessively small or excessively large) may be cut and taken as a defective piece, followed by recovery of bedding powder 4 from the defective piece. A portion damaged during conveyance of the sheet-shaped ceramic compact 1b may be cut and taken as a defective piece, followed by recovery of bedding powder 4 from the defective piece. Similarly, the plate-shaped ceramic compact 6b with an unfavorable application amount and damage may be taken as a defective piece, followed by recovery of bedding powder 4 from the defective piece. Here, the offcut 12 also includes a defective piece.

Next, in the cleaning step ST5 (shown in FIG. 5), one or more offcuts 12 are immersed in a cleaning liquid 9, and the cleaning liquid 9 is vibrated to clean the offcut 12. The cleaning in which the cleaning liquid 9 is vibrated comprises at least one selected from ultrasonic cleaning, bubbling cleaning, shaking cleaning, stirring cleaning and jet cleaning. When the cleaning in which the cleaning liquid 9 is vibrated comprises two or more cleaning methods, the cleaning methods may be simultaneously carried out in combination, or may be sequentially carried out. In the cleaning step ST5, the offcut 12 may be all disintegrated into ceramic powder, only a part of the offcut 12 may be disintegrated into ceramic powder, or the offcut 12 is not required to be disintegrated into ceramic powder.

The ultrasonic cleaning is cleaning performed while ultrasonic waves are applied to a cleaning liquid. This is a cleaning method utilizing cavitation caused by ultrasonic waves, and is based mainly on the following mechanism. When vibrations caused by ultrasonic waves propagate into a liquid, air bubbles are formed by a pressure fluctuation that is dependent on a relevant frequency. The air bubbles increase the pressure while repeatedly expanding and shrinking with the pressure fluctuation, and then collapse. By jets and shock waves generated in the collapse of the air bubbles, deposits on an object to be cleaned are released. The action in which deposits on an object to be cleaned are released by collapse of air bubbles is herein referred to as a "cavitation effect".

The bubbling cleaning is a method in which bubbles are applied to a cleaning liquid or generated in the cleaning liquid, and cleaning is performed by use of a physical action of the bubbles. The shaking cleaning is a method in which cleaning is performed while a cleaning liquid is shaken. Examples of the shaking cleaning include a method in which cleaning is performed while a cleaning tank itself is shaken. The stirring cleaning is a method in which cleaning is performed while a cleaning liquid is stirred. The jet cleaning is a method in which cleaning is performed while a cleaning liquid is sprayed. The jet cleaning is also referred to as a jet bath cleaning.

Among ultrasonic cleaning, bubbling cleaning, shaking cleaning, stirring cleaning and jet cleaning, ultrasonic cleaning is preferred as cleaning in which the cleaning liquid 9 is vibrated. This is because the ultrasonic cleaning is capable of cleaning independently of the shape and the size of the offcut 12, and allows release of deposits on the offcut 12 and disintegration of the offcut to be easily performed by the cavitation effect. In addition, in the ultrasonic cleaning, the level of cleaning can be controlled by controlling occurrence of cavitation.

On the other hand, in the jet cleaning and bubbling cleaning, cleaning of portions which are not in contact with jets or bubbles is likely to be insufficient. In the shaking cleaning and stirring cleaning, there is a possibility that the cleaning liquid in portions such as small gaps formed in the offcut 12 cannot be sufficiently shaken, and deposits existing in such portions are not sufficiently cleaned. In particular, the offcut 12 is as soft as that before sintering, and is often cleaned in the form of a bundle of thin and long threads, so that there may be portions which have not been cleaned in the case of jet cleaning, bubbling cleaning, shaking cleaning and stirring cleaning. In contrast, the ultrasonic cleaning is capable of cleaning independently of the shape of the offcut 12 because cavitation acts on even minute portions once the portions are soaked with the cleaning liquid.

On the other hand, as a disadvantage of the ultrasonic cleaning, the number of occurrences of cavitation varies depending on a distance from an ultrasonic wave generator, so that there may be difference in cleaning state within the cleaning tank. To address this, at least one of jet cleaning, bubbling cleaning, shaking cleaning and stirring cleaning is simultaneously or sequentially combined with ultrasonic cleaning, whereby the offcut 12 can be uniformly cleaned.

Hereinafter, the present invention will be described by taking as an example a case in which the cleaning step ST5 (shown in FIG. 5) comprises ultrasonic cleaning. In the case where the cleaning step ST5 does not comprise ultrasonic cleaning, but comprises at least one of jet cleaning, bubbling cleaning, shaking cleaning and stirring cleaning, what is written about ultrasonic cleaning is replaced as appropriate. For example, when instead of ultrasonic cleaning, at least one of bubbling cleaning, shaking cleaning, stirring cleaning and jet cleaning is included, instead of the ultrasonic frequency, vibrations that are dependent on cleaning ability at the frequency is used in the relevant cleaning method. In addition, when in the cleaning step ST5, cleaning is performed in which ultrasonic cleaning and other cleaning methods are simultaneously combined, what is written about ultrasonic cleaning alone is similarly replaced as appropriate.

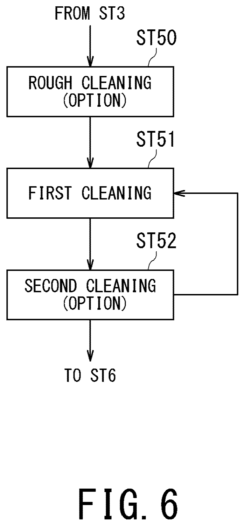

As an example of the cleaning step ST5, ultrasonic cleaning is performed as first cleaning ST51 as shown in FIG. 6. As described above, the first cleaning ST51 is only required to comprise at least one of ultrasonic cleaning, jet cleaning, bubbling cleaning, shaking cleaning and stirring cleaning.

By ultrasonic cleaning, the offcut 12 immersed in a cleaning liquid 9a inside the cleaning tank 8 (Division (A) of FIG. 4) can be dismantled to separate bedding powder 4 from the offcut 12 or ceramic powder generated by disintegration of the offcut 12. In performing ultrasonic cleaning, ceramic powder and bedding powder 4 are included into the cleaning liquid 9a. Herein, the cleaning liquid after first cleaning ST51 is also referred to as a mixed liquid 11a (shown in Division (B) of FIG. 4).

In the ultrasonic cleaning as first cleaning ST51, the frequency is preferably 10 kHz or more. If the ultrasonic frequency is less than 10 kHz, the cavitation effect may be insufficient. If the cavitation effect is insufficient, it may take much time for cleaning. The upper limit of the frequency is not particularly limited, but is preferably 5 MHz or less. A frequency of more than 5 MHz does not have a greater effect, and may rather cause increased cost. For this reason, the ultrasonic frequency in the first cleaning is preferably 10 kHz or more and 5 MHz or less. In a preferred aspect, the ultrasonic frequency is more preferably 20 kHz or more and 200 kHz or less.

In the first cleaning ST51, an aqueous cleaning liquid is preferably used as the cleaning liquid 9a. Here, the aqueous cleaning liquid refers to a cleaning liquid obtained by adding a chemical liquid containing a component such as a surfactant to water, or water. As the water, tap water or the like can be used. The sheet-shaped ceramic compact 1a commonly contains an organic binder as a binding agent, and may contain an organic solvent. Even in application of bedding powder 4 to the sheet-shaped ceramic compact 1a, an organic solvent may be used. The chemical liquid facilitates separation of the organic binder and organic solution.

The chemical liquid is preferably a water-soluble surfactant. Examples of the water-soluble surfactant include cationic, anionic and nonionic surfactants. Of these, nonionic (non-ionic) surfactants are preferred. A nonionic surfactant does not remain as ions in the recovered ceramic power and bedding powder 4. Therefore, it is possible to suppress the deterioration of sintering properties in reuse.

The cleaning time of the first cleaning ST51 is preferably 3 minutes or more. Here, the cleaning time is the time of applying ultrasonic waves to the cleaning liquid 9a. If the cleaning time is less than 3 minutes, the effect of cleaning may be insufficient. The upper limit of the cleaning time of the first cleaning ST51 is not particularly limited, but is preferably 120 minutes or less. A cleaning time of more than 120 minutes does not have a greater effect, and may rather cause increased cost. For this reason, the cleaning time of the first cleaning ST51 is preferably 3 minutes or more and 120 minutes or less. In a preferred aspect, the cleaning time is more preferably 5 minutes or more and 60 minutes or less. The preferred cleaning time described above is associated with one first cleaning. As described later, when the first cleaning ST51 is performed two or more times, the cleaning time for each cleaning is preferably within a range of 3 minutes or more and 120 minutes or less.

As an example of the cleaning step ST5 (shown in FIG. 5), water cleaning in which the cleaning liquid is optionally vibrated is preferably performed as second cleaning ST52 after the first cleaning ST51. The water cleaning is cleaning using water free of a chemical liquid as the cleaning liquid 9 (that is, when water is used as the aqueous cleaning liquid 9a in the first cleaning ST51, the first cleaning ST51 is water cleaning). After the first cleaning ST51, the offcut 12 is taken out from the mixed liquid 11a, and immersed in a cleaning liquid 9b of a water cleaning tank 10 to perform the second cleaning ST52 (shown in Division (C) of FIG. 4). The same apparatus may be used for the cleaning tank 8 and the water cleaning. In this case, the mixed liquid 11a is replaced with the cleaning liquid 9b, and the second cleaning ST52 is performed. By the second cleaning ST52, cleaning can be performed with the cleaning liquid 9b after removal of separated materials of bedding powder 4, ceramic powder, a sintering agent, a binder, an organic solvent and the like which are included into the cleaning liquid 9a in the first cleaning ST51. That is, the second cleaning ST52 has a rinsing effect. The cleaning time of the second cleaning ST52 is preferably within a range of 3 minutes or more and 120 minutes or less. The cleaning time of the second cleaning ST52 is the time of applying ultrasonic waves and other actions to the cleaning liquid 9b.

Ultrasonic cleaning may be performed in the second cleaning ST52. By performing ultrasonic cleaning in the second cleaning ST52, the rinsing effect can be improved. The frequency at which ultrasonic cleaning is performed in the second cleaning ST52 is preferably within a range of 10 kHz or more and 200 kHz or less.

The first cleaning ST51 and the second cleaning ST52 may be combined, and performed two or more times. When they are combined, and performed two or more times, it is possible to carry out cleaning while removing separated materials from the cleaning liquid 9. By this, for example, the action of the chemical liquid can be enhanced. Preferably, the first cleaning ST51 and the second cleaning ST52 are preferably alternately performed. When a combination in which the first cleaning ST51, and then the second cleaning ST52 are performed is assumed to be 1 set, the number of times the continuous combination is performed is preferably 1 set or more and 10 sets or less.

The cleaning performed last in the cleaning step ST5 is finish cleaning. The finish cleaning is preferably water cleaning. For the finish cleaning, when the cleaning step ST5 (shown in FIG. 5) comprises a plurality of cleaning processes, the last cleaning is finish cleaning, and when the cleaning step ST5 (shown in FIG. 5) comprises one cleaning, the cleaning is also finish cleaning.

In the cleaning step ST5 (shown in FIG. 5), rough cleaning ST50 may be performed. Here, the rough cleaning ST50 is cleaning performed first in the cleaning step ST5, as well as water cleaning intended to dismantle the offcut 12. By dismantling the offcut 12 to reduce the size of the offcut 12 in advance, the cleaning efficiency of subsequent cleaning ST51 and ST52 can be improved. From the viewpoint of ability to dismantle the offcut 12, the rough cleaning ST50 is preferably cleaning in which the cleaning liquid 9 is vibrated, and more preferably ultrasonic cleaning in a preferred aspect. When ultrasonic cleaning is performed as the rough cleaning ST50, the frequency is preferably in a range of 10 kHz or more and 200 kHz or less, the cleaning time is preferably 3 minutes or more and 80 minutes or less, and more preferably shorter than that of the first cleaning in a preferred aspect, from the viewpoint of ability and efficiency to dismantle the offcut 12.

It is the cleaning step ST5 that has been described above by taking as an example a case in which ultrasonic cleaning is included. By this step, bedding powder 4 attached to the offcut 12 can be separated. In the cleaning step ST5, all bedding powder 4 attached to the offcut 12 or ceramic powder generated by disintegration of the offcut 12 is not necessarily separated, and a part of attached bedding powder may be separated. The offcut 12 from which bedding powder has been separated may be recovered, and used as a raw material for a recycled slurry.

Next, in the separation and recovery step ST6 (shown in FIG. 5), the step of separating and recovering ceramic powder, bedding powder 4, or both thereof from the mixed liquid 11 generated in the cleaning step ST5 (a mixed liquid 11a generated in the first cleaning and/or a mixed liquid 11b generated in the second cleaning and/or a mixed liquid 11c generated in the rough cleaning) is performed. In this step, a sintering additive may be separated and recovered.

Examples of the method for the step of separating and recovering ceramic powder, bedding powder 4, or both thereof include a method using a filter, and a method using a centrifuge. In the method using a filter, for example, a mesh-shaped filter is used. For example, a mesh-shaped filter having a mesh size that is dependent on the particle size of powder to be separated is used. The filter may be multi-layered, or may be multi-layered with filters having different mesh sizes. In the method using a centrifuge, a difference in mass is used to separate ceramic powder or bedding powder 4.

The step of separating and recovering ceramic powder, bedding powder 4, or both thereof may be performed on the mixed liquid 11, or may be performed on the mixed liquid 11 from which the solvent has been evaporated.

By the cleaning step ST5 and the separation and recovery step ST6 described above, ceramic powder, bedding powder 4, or both thereof can be recovered, and the sintering additive can be recovered. As shown in FIG. 5, the recovered ceramic powder and sintering additive can be reused in the formation step ST1, and the bedding powder 4 can be reused in the bedding powder application step ST2.

The bedding powder 4 obtained by a method for recovering bedding powder according to an embodiment can be applied to a surface of the sheet-shaped ceramic compact 1a in the bedding powder application step ST2. When the bedding powder 4 is reused, only the recovered bedding powder 4 may be used, or new bedding powder and the recovered bedding powder 4 may be used in mixture.

The ceramic powder obtained by a method for recovering bedding powder according to an embodiment can be reused in preparation of the sheet-shaped ceramic compact 1a in the formation step ST1. When the ceramic powder is reused, only the recovered ceramic powder may be used, or new ceramic powder and the recovered ceramic powder may be used in mixture. The sintering additive obtained by a method for recovering bedding powder according to an embodiment can be reused in preparation of the sheet-shaped ceramic compact 1a in the formation step ST1. When the sintering additive is reused, only the sintering additive may be used, or a new sintering additive and the recovered sintering additive may be used in mixture.

A method for producing a ceramic sintered compact according to an embodiment comprises a bedding powder application step ST2 of, with bedding powder 4 obtained by a method for recovering bedding powder according to an embodiment, applying the bedding powder 4 to a surface of a sheet-shaped ceramic compact 1a, and a cutting step ST3 of cutting a sheet-shaped ceramic compact 1b coated with the bedding powder 4, and a sintering step ST4 of sintering a plate-shaped ceramic compact 6b after cutting.

Alternatively, a method for producing a ceramic sintered compact according to an embodiment comprises a formation step ST1 of forming a sheet-shaped ceramic compact 1a using ceramic powder obtained by a method for recovering bedding powder according to an embodiment as raw material powder, a bedding powder application step ST2 of applying bedding powder 4 to a surface of a sheet-shaped ceramic compact 1a, a cutting step ST3 of cutting a sheet-shaped ceramic compact 1b coated with the bedding powder 4, and a sintering step ST4 of sintering a plate-shaped ceramic compact 6b after cutting.

Alternatively, a method for producing a ceramic sintered compact according to an embodiment comprises a formation step ST1 of forming a sheet-shaped ceramic compact 1a using ceramic powder obtained by a method for recovering bedding powder according to an embodiment as raw material powder, a bedding powder application step ST2 of applying bedding powder 4 obtained by a method for recovering bedding powder according to an embodiment to a surface of a sheet-shaped ceramic compact 1a, a cutting step ST3 of cutting a sheet-shaped ceramic compact 1b coated with the bedding powder 4, and a sintering step ST4 of sintering a plate-shaped ceramic compact 6b after cutting.

In the method for producing a ceramic sintered compact according to the embodiment, a good plate-shaped ceramic sintered compact can be obtained even when the bedding powder 4 obtained by the recovery method described above is reused. Similarly, a good plate-shaped ceramic sintered compact can be obtained even when the ceramic powder obtained by the recovery method described above is reused. For example, a ceramic board with bedding powder 4 or ceramic powder obtained by the recovery method described above is equivalent in peeling property between boards after sintering and characteristics such as strength, heat conductivity and insulation property to a similar ceramic board in which recovered bedding powder 4 or ceramic powder is not used.

The step of sintering the plate-shaped ceramic compact 6b is performed in a high-temperature environment at about 1,600 to 2,000°C. The bedding powder 4 is required to be capable of being used even in a high-temperature environment. Therefore, an expensive material such as boron nitride or zirconium oxide is used for the bedding powder 4. Enabling the reuse of the bedding powder 4 is effective for reduction of cost and improvement of productivity. The reuse of ceramic powder is also effective for reduction of cost and improvement of productivity. In addition, offcuts that have heretofore had to be scrapped can be reused, which is effective for reduction of wastes.

(Examples)

(Examples 1 to 7 and Comparative Example 1)

For testing the methods for recovering bedding powder according to Examples 1 to 7 and Comparative Example 1, a plate-shaped ceramic compact obtained by cutting a sheet-shaped ceramic compact coated with BN (boron nitride) bedding powder (hereinafter, referred to as a "ceramic compact piece") was provided as a simulation of an offcut 12. Specifically, for testing the methods for recovering bedding powder according to Examples 1 to 6 and Comparative Example 1, a plate-shaped silicon nitride compact obtained by cutting a sheet-shaped silicon nitride compact coated with BN bedding powder (an example of a ceramic compact piece) was provided. For testing the method for recovering bedding powder according to Example 7, a plate-shaped nitride aluminum compact obtained by cutting a sheet-shaped aluminum nitride compact coated with BN bedding powder (an example of a ceramic compact piece) was provided.

The ceramic compact piece was assumed as the offcut 12, and cleaned under the conditions of Examples 1 to 7 and Comparative Example 1 shown in Table 1. In ultrasonic cleaning as first cleaning ST51, a cleaning liquid containing a chemical liquid was used. In the case of Examples 3 and 6 in which the first cleaning ST51 was performed two or more times, the cleaning liquid 9a was changed every cleaning process. In the case of Examples 1 and 3 to 7 and Comparative Example 1 in which second cleaning ST52 was performed, the second cleaning step was finish cleaning, as well as water cleaning. On the other hand, in the case of Example 2 in which the second cleaning ST52 was not performed, once of the first cleaning processes served also as finish cleaning.

[Table 1]

| | | Rough Cleaning | | First Cleaning (e.g., Ultrasonic Cleaning) | | |
|---|---|---|---|---|---|---|
| | | Executed or Not | Ultrasonic Frequency [kHz] | Ultrasonic Frequency [kHz] | Cleaning Time [min.] | The Number of Times |
| | Example 1 | Not | - | 15 | 10 | 1 |
| | Example 2 | Not | - | 50 | 8 | 1 |
| | Example 3 | Executed | N/A | 30 | 5 | 3 |
| | Example 4 | Executed | 30 | 50 | 8 | 1 |

(continued)

|  | Rough Cleaning | | First Cleaning (e.g., Ultrasonic Cleaning) | | |
|---|---|---|---|---|---|
|  | Executed or Not | Ultrasonic Frequency [kHz] | Ultrasonic Frequency [kHz] | Cleaning Time [min.] | The Number of Times |
| Example 5 | Executed | 15 | 60 | 5 | 1 |
| Example 6 | Executed | 30 | 30 | 5 | 5 |
| Example 7 | Not | - | 15 | 10 | 1 |
| Comparative Example 1 | Not | - | - | - | - |

|  | Second Cleaning | | |
|---|---|---|---|
|  | Executed or Not | Ultrasonic Frequency [kHz] | The Number of Times |
| Example 1 | Executed | N/A | 1 |
| Example 2 | Not | - | - |
| Example 3 | Executed | 10kHz | 1 |
| Example 4 | Executed | 30kHz | 1 |
| Example 5 | Executed | 15kHz | 1 |
| Example 6 | Executed | 30kHz | 1 |
| Example 7 | Executed | N/A | 1 |
| Comparative Example 1 | Executed | N/A | 1 |

The methods for recovering bedding powder according to Examples 1 to 7 all comprise first cleaning ST51 by ultrasonic cleaning. Furthermore, the methods for recovering bedding powder according to Examples 3 to 6 comprise rough cleaning ST50. Furthermore, the methods for recovering bedding powder according to Examples 4 to 6 comprise ultrasonic cleaning as rough cleaning ST50.

The method for recovering bedding powder according to Example 2 does not comprise second cleaning ST52. In the methods for recovering bedding powder according to Examples 3 to 6, second cleaning ST52, that is, ultrasonic cleaning was performed as finish cleaning. In Examples 3 and 6, the cleaning liquid 9a was changed, and first cleaning ST51 was performed two or more times. In Comparative Example 1, at least, first cleaning ST51 in which a cleaning liquid is vibrated was not performed.

From a mixed liquid 11 containing BN bedding powder, ceramic powder and sintered additive powder after cleaning of the ceramic compact piece, BN powder was recovered and separated.

The amount of BN bedding powder applied to the ceramic test piece and the amount of BN bedding powder recovered were measured, and the recovery ratio of bedding powder (%) was calculated by the following expression.

Recovery ratio of bedding powder (%) = (amount of BN bedding powder recovered/amount of BN bedding powder applied) $\times$ 100

Table 2 shows results obtained by the expression, where "A" is assigned when the recovery ratio is 60% or more and 100% or less, "B" is assigned when the recovery ratio is 40% or more and less than 60%, and "C" is assigned when the recovery ratio is less than 40%.

[Table 2]

|  | Recovery Ratio |
|---|---|
| Example 1 | B |
| Example 2 | B |
| Example 3 | A |
| Example 4 | A |

(continued)

|  | Recovery Ratio |
|---|---|
| Example 5 | A |
| Example 6 | A |
| Example 7 | B |
| Comparative Example 1 | C |

As shown in Table 2, in the methods for recovering bedding powder according to Examples 1 to 7, the recovery ratio of bedding powder was improved and was 40% or more because of the effect of first cleaning ST51. Furthermore, in the methods for recovering bedding powder according to Examples 3 to 6, the recovery ratio of bedding powder was further improved and was 60% or more because rough cleaning ST50 was performed. This demonstrates that the rough cleaning is effective. In Comparative Example 1, as compared to Examples 1 to 7, the recovery ratio of bedding powder decreased and was less than 40% because at least, first cleaning ST51 in which a cleaning liquid is vibrated was not performed.

When BN bedding powder obtained by the methods for recovering bedding powder according to Examples 1 to 7 was applied again to the processes of producing a silicon nitride board and an aluminum nitride board, a silicon nitride board and an aluminum nitride board capable of being used without problems were obtained. This demonstrated that it was possible to reuse BN bedding powder obtained by the method for recovering bedding powder.

When silicon nitride powder, aluminum nitride powder and sintering additive powder which are ceramic powder obtained by the method for recovering BN bedding powder were applied again to the processes of producing a silicon nitride board and an aluminum nitride board, a silicon nitride board and an aluminum nitride board of equivalent strength, heat conductivity and insulation property were obtained. Thus, it was demonstrated that the methods for recovering bedding powder according to Examples 1 to 7 were also effective for recovery and reuse of ceramic powder.

According to at least one of the embodiments described above, bedding powder 4 can be separated from ceramic powder of the offcut 12 to recover and reuse the bedding powder 4.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A method for recovering bedding powder, comprising:

   a cleaning step of vibrating a cleaning liquid to clean a ceramic compact piece to which bedding powder is attached; and
   a recovery step of recovering at least bedding powder from a mixed liquid generated in the cleaning step.

2. The method for recovering bedding powder according to claim 1, wherein the cleaning step comprises ultrasonic cleaning.

3. The method for recovering bedding powder according to claim 2, wherein the cleaning step is a step of vibrating the cleaning liquid at an ultrasonic frequency of 10 kHz or more in the ultrasonic cleaning.

4. The method for recovering bedding powder according to claim 3, wherein the cleaning step further comprises water cleaning after the ultrasonic cleaning.

5. The method for recovering bedding powder according to claim 3, wherein the cleaning step further comprises rough cleaning for dismantling the ceramic compact piece before the ultrasonic cleaning.

6. The method for recovering bedding powder according to claim 4, wherein the cleaning step further comprises rough cleaning for dismantling the ceramic compact piece before the ultrasonic cleaning.

7. The method for recovering bedding powder according to claim 2, wherein the ceramic compact piece is an offcut generated by cutting a sheet-shaped ceramic compact to which the bedding powder is attached.

8. The method for recovering bedding powder according to claim 6, wherein the ceramic compact piece is an offcut generated by cutting a sheet-shaped ceramic compact to which the bedding powder is attached.

9. The method for recovering bedding powder according to claim 1, wherein the bedding powder is boron nitride, and the ceramic compact piece is a silicon nitride compact.

10. The method for recovering bedding powder according to claim 2, wherein the bedding powder is boron nitride, and the ceramic compact piece is a silicon nitride compact.

11. The method for recovering bedding powder according to claim 8, wherein the bedding powder is boron nitride, and the ceramic compact piece is a silicon nitride compact.

12. A method for producing a ceramic sintered compact, comprising:

a bedding powder application step of applying the bedding powder obtained by the method according to claim 1 to a surface of a sheet-shaped ceramic compact;
a cutting step of cutting the sheet-shaped ceramic compact coated with the bedding powder; and
a sintering step of sintering a plate-shaped ceramic compact after the cutting.

13. A method for producing a ceramic sintered compact, comprising:

a bedding powder application step of applying the bedding powder obtained by the method according to claim 2 to a surface of a sheet-shaped ceramic compact;
a cutting step of cutting the sheet-shaped ceramic compact coated with the bedding powder; and
a sintering step of sintering a plate-shaped ceramic compact after the cutting.

14. A method for producing a ceramic sintered compact, comprising:

a bedding powder application step of applying the bedding powder obtained by the method according to claim 11 to a surface of a sheet-shaped ceramic compact;
a cutting step of cutting the sheet-shaped ceramic compact coated with the bedding powder; and
a sintering step of sintering a plate-shaped ceramic compact after the cutting.

15. A method for producing a ceramic sintered compact, comprising:

a formation step of forming a sheet-shaped ceramic compact with ceramic powder obtained by the method according to claim 1, in which the recovery step comprises recovering the ceramic powder in addition to the bedding powder;
a bedding powder application step of applying bedding powder to the sheet-shaped ceramic compact;
a cutting step of cutting the sheet-shaped ceramic compact coated with the bedding powder; and
a sintering step of sintering a plate-shaped ceramic compact after the cutting.

16. A method for producing a ceramic sintered compact, comprising:

a formation step of forming a sheet-shaped ceramic compact with ceramic powder obtained by the method according to claim 2, in which the recovery step comprises recovering the ceramic powder in addition to the bedding powder;
a bedding powder application step of applying bedding powder to the sheet-shaped ceramic compact;
a cutting step of cutting the sheet-shaped ceramic compact coated with the bedding powder; and
a sintering step of sintering a plate-shaped ceramic compact after the cutting.

17. A method for producing a ceramic sintered compact, comprising:

a formation step of forming a sheet-shaped ceramic compact with ceramic powder obtained by the method according to claim 11, in which the recovery step comprises recovering the ceramic powder in addition to the bedding powder;
a bedding powder application step of applying bedding powder to the sheet-shaped ceramic compact;
a cutting step of cutting the sheet-shaped ceramic compact coated with the bedding powder; and
a sintering step of sintering a plate-shaped ceramic compact after the cutting.

18. The method for producing a ceramic sintered compact according to any one of claims 12 to 17, wherein the ceramic sintered compact is a ceramic board.

3

4

1a

2

# FIG. 1

$1b \begin{cases} 5\,(4) \\ 1a \end{cases}$

# FIG. 2

7

$6b \begin{cases} 5\,(4) \\ 6a \end{cases}$   $\begin{cases} 5\,(4) \\ 6c \end{cases} 12$

# FIG. 3

9a (9)

8

12

(A)

MIXED LIQUID          OFFCUT

OFFCUT

11a (11)

8

(B)

9b (9)

10

12

(C)

MIXED LIQUID

11b (11)

10

(D)

# F I G. 4

CERAMIC POWDER, BINDER,
SINTERING ADDITIVE, ETC.

ST1

FORMATION STEP ← (REUSE) CERAMIC POWDER AND
SINTERING ADDITIVE

SHEET-SHAPED PRODUCING
CERAMIC COMPACT 1a

ST2

BEDDING POWDER 4 →

BEDDING POWDER
APPLICATION STEP ← (REUSE) BEDDING POWDER 4

SHEET-SHAPED PRODUCING
CERAMIC COMPACT 1b

ST3

CUTTING STEP

PLATE-SHAPED PRODUCING
CERAMIC COMPACT 6b

OFFCUT 12

METHOD FOR PRODUCING
CERAMIC COMPACT

ST4

SINTERING STEP

PLATE-SHAPED CERAMIC
SINTERED COMPACT
(CERAMIC BOARD)

ST5

CLEANING STEP

ST6

SEPARATION AND
RECOVERY STEP

METHOD FOR RECOVERING
BEDDING POWDER

# FIG. 5

FROM ST3

ST50

┌─────────────────────┐
│   ROUGH CLEANING    │
│      (OPTION)       │
└─────────────────────┘

ST51

┌─────────────────────┐
│   FIRST CLEANING    │
└─────────────────────┘

ST52

┌─────────────────────┐
│  SECOND CLEANING    │
│      (OPTION)       │
└─────────────────────┘

TO ST6

# FIG. 6

## INTERNATIONAL SEARCH REPORT

| | |
|---|---|
| International application No. | |
| | **PCT/JP2024/011514** |

**A. CLASSIFICATION OF SUBJECT MATTER**

*C04B 35/622*(2006.01)i; *B08B 3/04*(2006.01)i; *B08B 3/12*(2006.01)i; *B08B 5/02*(2006.01)i
FI: C04B35/622 040; B08B3/12 A; B08B3/04 A; B08B5/02 Z

According to International Patent Classification (IPC) or to both national classification and IPC

**B. FIELDS SEARCHED**

Minimum documentation searched (classification system followed by classification symbols)

C04B35/622; B08B3/04; B08B3/12; B08B5/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-091742 A (HITACHI METALS, LTD.) 14 May 2015 (2015-05-14) paragraphs [0037]-[0042] | 1-18 |
| A | JP 2006-151762 A (TORAY INDUSTRIES, INC.) 15 June 2006 (2006-06-15) paragraph [0007] | 1-18 |
| A | JP 9-157014 A (TOSOH CORP.) 17 June 1997 (1997-06-17) paragraph [0008] | 1-18 |
| A | CN 213728226 U (JA SOLAR CO., LTD.) 20 July 2021 (2021-07-20) paragraphs [0002], [0026] | 1-18 |
| A | CN 101712185 A (ZOU, Xiaofeng) 26 May 2010 (2010-05-26) entire text, all drawings | 1-18 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **27 May 2024** | **04 June 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

| International application No. |
|---|
| **PCT/JP2024/011514** |

| Patent document cited in search report | | | Publication date (day/month/year) | Patent family member(s) | Publication date (day/month/year) |
|---|---|---|---|---|---|
| JP | 2015-091742 | A | 14 May 2015 | (Family: none) | |
| JP | 2006-151762 | A | 15 June 2006 | (Family: none) | |
| JP | 9-157014 | A | 17 June 1997 | (Family: none) | |
| CN | 213728226 | U | 20 July 2021 | (Family: none) | |
| CN | 101712185 | A | 26 May 2010 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5673847 B
- JP 3779481 B

- JP 2015091742 A